# EUROPEAN PATENT APPLICATION

(11) **EP 2 187 695 A1**
(43) Date of publication of application: **19.05.2010**
(21) Application number: 08870551.2
(22) Date of filing: 26.12.2008
(51) Int. Cl.: H04W 84/08

(54) **METHOD, DEVICE AND SYSTEM FOR REALIZING TASK IN CLUSTER ENVIRONMENT**

(30) Priority: 28.12.2007 CN 200710305099
(71) Applicant: Huawei Technologies Co., Ltd., Longgang District, Shenzhen Guangdong 518129 (CN)
(72) Inventor: ZHANG, Zhiguo, Shenzhen 518129 (CN)
(74) Representative: Kreuz, Georg Maria
(86) International application number: PCT/CN2008/073782
(87) International publication number: WO 2009/089746

(57) **Abstract**

The present invention relates to a method, an apparatus, and a system for implementing a task in a cluster environment. In the embodiments of the present invention, a specified application in the cluster retrieves the task from the database, loads the retrieved task, creates a task instance and stores the task instance into the memory of the server that runs the application. In this way, a task in the database is never loaded repeatedly in the cluster environment.

## Description

### FIELD OF THE INVENTION

The present invention relates to communication technologies, and in particular, to a method, a system, and an apparatus for implementing a task in a cluster environment.

### BACKGROUND

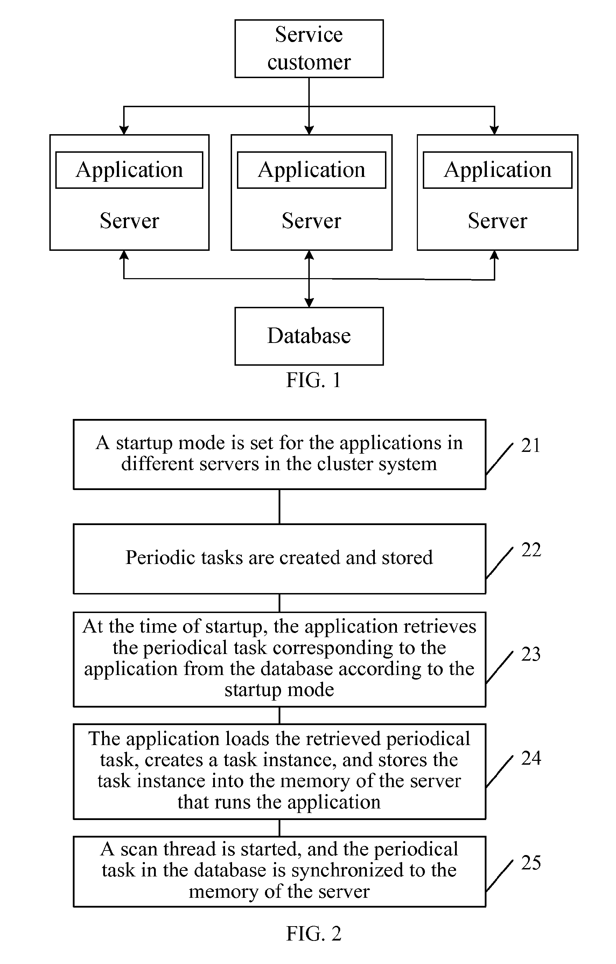

In order to improve the disaster recovery capability and the performance of a system, the cluster technology is applied widely. However, problems often occur when a function originally used in a stand-alone device is migrated into a cluster environment. For example, as shown in FIG. 1, in order to implement task functions, the applications of all servers in a cluster share the database. Therefore, multiple applications in different servers may obtain the same task (such as startup or restart process) in the same database simultaneously. Consequently, one task may be loaded by multiple applications repeatedly and the task is mistakenly executed as multiple tasks.

The existing solution to such a problem is: A field is added into the database table of the task to identify whether the task has been started (for example, whether the task already exists in the memory). If the task has been started, other applications are not allowed to start it any more, thus avoiding such errors.

The following defects have become apparent in the prior art:

The system for solving the problem in the prior art is complicated, and hardly ensures to accurately mark the state of starting of the task. For example, after the server is started, an application retrieves a task from the database, and marks the task. A delay may exist between retrieval of the task and the marking of the task. During the delay, another application may retrieve the same task, and then one task is started by multiple applications.

### SUMMARY

The objectives of the present invention are to provide a method, a system, and an apparatus for implementing tasks in a cluster environment so that the tasks would not be loaded repeatedly in the cluster environment.

A method for implementing tasks in a cluster environment includes:
retrieving, by a specified application, a task from a database; and
loading the retrieved task, creating a task instance, by the specified application and storing the task instance into the memory of the server that runs the specified application.

An apparatus for implementing a task includes:
a judging unit, adapted to judge whether the specified application needs to execute a task loading operation; and
a task processing unit, adapted to obtain and load a task after the judging unit determines that the specified application needs to execute a task loading operation, create a task instance, and store the task instance into the memory of the server that the apparatus affiliates with.

A system for implementing a task in a cluster environment includes a database and multiple servers.

The database is adapted to store a task and its time stamp;

The application in some of the multiple servers is the specified application. The task implementing apparatus in the server that includes the specified application is adapted to obtain and load the tasks stored in the database when determining it is necessary to execute the task loading operation, create a task instance, and store the task instance into the memory of the server that the apparatus affiliates with.

The technical solution under the present invention reveals that: In the embodiments of the present invention, an application in the cluster is specified for retrieving the task from the database; and the specified application loads the retrieved task, creates a task instance and stores the task instance into the memory of the server that runs the application. In this way, a task in the database is never loaded repeatedly in the cluster environment.

### BRIEF DESCRIPTION OF THE DRAWINGS

FIG. 1 is a schematic diagram of implementing tasks in a cluster environment in the prior art;
FIG. 2 is a flowchart of a method provided in an embodiment of the present invention;
FIG. 3 is a schematic diagram of implementing a scan thread in the method provided in an embodiment of the present invention;
FIG. 4 shows deployment of a method provided in an embodiment of the present invention;
FIG. 5 shows deployment of a method provided in an embodiment of the present invention; and
FIG. 6 shows a structure of a system provided in an embodiment of the present invention.

### DETAILED DESCRIPTION

A method for implementing tasks in a cluster environment is provided in an embodiment of the present invention. The method includes: First, the specified application retrieves a task from a database, loads the retrieved task, and creates a task instance (namely, obtains the task instance by loading and executing the corresponding task), and stores the task instance into the memory of the server that runs the specified application. Afterward, the specified application starts the scan thread, and synchronizes the changed or newly added tasks in the database to the memory of the server. In this way, the task operations are performed correctly in the cluster environment.

Optionally, the method for implementing tasks in a cluster environment in an embodiment of the present invention may further include: setting a startup mode, namely, setting the specified application. The detailed setting steps are as follows:
setting one or more applications in the cluster environment to the task scheduling startup mode, where the applications which are set to the task scheduling startup mode serve as specified applications; and
setting other applications in the cluster environment to the node startup mode, where the applications which are set to the node startup mode are adapted to create tasks; store the created tasks into the database, and update the tasks in the database.

In an embodiment of implementing a task, a concept of task scheduling is put forward on the basis of stand-alone task management; different startup modes are set for the applications in different servers in a cluster; and the specified applications execute the corresponding task loading operation in the cluster environment, and therefore, the corresponding tasks are implemented correctly, for example, tasks to be performed periodically, and other various tasks.

Further, the startup mode in an embodiment of the present invention may be stand-alone startup mode, node startup mode, or task scheduling startup mode.

The stand-alone startup mode is generally applied to a non-cluster environment. An application that works in a stand-alone startup mode performs task loading, task execution and lifecycle management (namely, lifecycle of the task) independently. The processing of the stand-alone startup mode is similar to that in the prior art, and is not repeated any further herein.

The node startup mode is generally applied to a cluster environment. An application that works in the node startup mode never performs task loading, task execution or lifecycle management, but handles creation of a task in the database, addition, deletion, modification or other operations of tasks in the database. Therefore, an application that works in the node startup mode never starts the task in the database at the time of startup, and never contends for the system resources. Generally, the applications in most servers in the cluster may be set to the node startup mode.

The task scheduling startup mode is generally applied to the cluster environment. An application that works in the task scheduling startup mode may perform task loading, task execution, and lifecycle management, and is a core application in the cluster, and does not need to handle the task creation or task update on the client.

In practical implement, different startup modes can be set for the applications in different servers in the cluster through the configuration file, and later, the settings may be modified as required.

In the foregoing task scheduling startup mode, the corresponding applications may process the tasks in the database through a scan thread. The processing ways include the following.

The application which works in the task scheduling startup mode loads the task and creates a task instance, and then scans the timestamp of the tasks in the database so as to filter the tasks in the database. A task filtered out is: either a task whose task timestamp in the database is greater than the startup loading time of the task in the memory, or the task newly created in the database. The tasks filtered out are synchronized to the memory of the server that runs the application.

In the foregoing scan thread, the scan operation may be performed periodically, or the scan operation of any set mode may be performed as required.

The timestamp involved in the foregoing scan thread generally refers to the time of the operations such as creating, adding, deleting or modifying a task in the database, or the time of other operations. Specifically, the timestamp refers to: the time when the application which works in the node startup mode in the cluster creates a task as required by the client, or the time of saving the task, or the time of deleting or modifying the task already stored in the database as required by the client.

If the timestamp of the scanned task is greater than the startup time of the loaded task, it indicates that the client has performed the operation of adding, deleting or modifying the task in the database in the node startup mode after the task in the database is loaded. It means that the loaded task may have changed, or a new task is added into the database. In such cases, the application which is set to the task scheduling startup mode needs to synchronize the created task instance with the changed task or newly added task in the database to ensure that the tasks in the database are executed correctly.

Such a task synchronization operation may include: comparing the tasks filtered out with the task instance stored in the memory of the server, and processing according to the comparison result. A task identifier uniquely identifies a task. Specifically, the processing includes the following operations:
updating the attribute of the task instance in the memory of the server if the task identifiers of the two are the same, namely, if the task identifier which is the same as the task filtered out is found in the memory of the server;
deleting the task instance corresponding to the memory of the server if the task filtered out of the database is in the deleted state; or
creating the task instance of the new task in the memory of the server if the memory of the server includes no task identifier which is the same as the task filtered out.

As shown in FIG. 2, the method for implementing tasks in a cluster environment in an embodiment of the present invention includes the following steps:
Step 21: A startup mode is set for the applications in different servers in the cluster system.

As mentioned above, different startup modes may be set for the applications in different servers in the cluster beforehand, and may be changed as required. Startup modes include: stand-alone startup mode, node startup mode, and task scheduling startup mode. The functions that need to be implemented in different modes have been described above, and are not repeated here any further.

Step 22: A task is created and stored.

Specifically, the application which is set to the node startup mode creates a task according to the task instruction of the client (for example, the task is: activating 300 telephone cards at 20:00 in a specific day), and stores the task into the database.

After the task is stored, the task timestamp of adding, deleting or modifying the task may be recorded in the database.

Step 22 may occur before, during or after step 21.

Step 23: When the application is started, according to the preset startup mode, the application which is set to the specified startup mode (for example, task scheduling startup mode) retrieves a task from the database, as detailed below:

When the application that belongs to different servers in the cluster is started or restarted, the application needs to read its own startup mode first, for example, node startup mode or task scheduling startup mode, so as to perform operations according to the corresponding startup mode:

If the application finds that its own startup mode is a node startup mode, the application does not manage the task loading, task execution or lifecycle, namely, does not retrieve the task from the database; instead, the application only creates and stores the task and updates the task in the database as required by the customer, namely, the application adds, modifies or deletes the task or performs other operations in the database. For example, if the customer requires the time of activating 300 telephone cards to be modified, or requires the quantity of the telephone cards ready for activating to change from 300 to 500, or requires to cancel the task or add a new task, the application that works in the node startup mode adds, deletes or modifies the task in the database as required by the customer. In this case, the timestamp of creating, saving, deleting or modifying the task needs to be recorded into the database so as to handle the corresponding task accurately.

If the application finds that its own startup mode is a task scheduling startup mode, the application retrieves a task from the database, and performs step 24.

Step 24: The application that is set to the task scheduling startup mode loads the retrieved task, creates a task instance, and stores it into the memory of the server that runs the application.

Specifically, the application that works in the task scheduling startup mode loads the task retrieved from the database, creates a task instance (for example, activating 300 telephone cards at 20:00 in a specific day), and stores the created task instance into the memory of the server that runs the application.

Step 25: The application which is set to the task scheduling startup mode starts the scan thread, and synchronizes the tasks in the database to the memory of the server.

After the specified application creates a task instance according to the task retrieved from the database, the scan thread may be started to scan the timestamp of the task in the database according to the preset intervals. Further, the task whose timestamp is greater than the loading start time is filtered out of the database, and is synchronized with the task instance in the memory of the server.

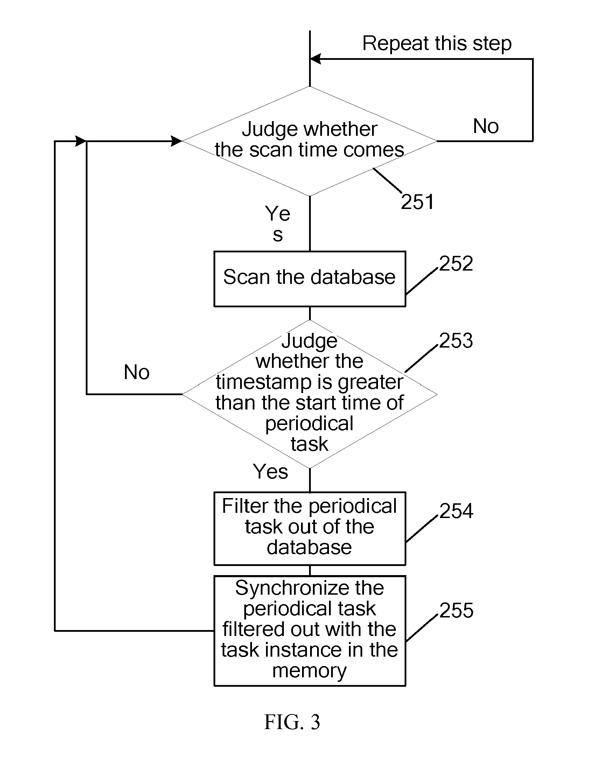

As shown in FIG. 3, the filtering process includes the following steps:
Step 251: A judgment is made about whether the scan time comes.

If the scan time comes, perform step 252; otherwise, repeat step 251 until the scan time comes.

Step 252: The database is scanned.

If the scan time comes, start scanning the timestamp of the task in the database.

Step 253: A judgment is made about whether the timestamp is greater than the start time of loading the task.

If the timestamp of the task in the database is greater than the start time of loading the task corresponding to the task instance stored in the memory of the server that runs the application, perform step 254; otherwise, perform step 251.

Step 254: The task is filtered out of the database.

The operation of filtering out the task compliant with the judgment condition in step 253 in the database is equivalent to obtaining the task compliant with the condition.

Step 255: The task filtered out is synchronized with the task instance in the memory.

The task filtered out is synchronized with the task instance in the memory of the server that runs the application. Specifically, the synchronization process may be: The task filtered out is compared with the task instance stored in the memory of the server. If the task identifiers are the same, the attribute of the task instance in the memory of the server is updated; or, if the task filtered out of the database is in the deleted state, the corresponding task instance in the memory of the server is deleted; if the memory of the server includes no task identifier which is the same as the task filtered out, a task instance of the new task is created in the memory of the server.

Through the foregoing scan thread, the task may be updated, for example, deleted or modified.

After completion of the foregoing operations, step 251 is repeated to perform the next processing flow.

In the method for implementing tasks in a cluster environment herein, different startup modes are set for the applications in different servers in the cluster system; the application which works in the task scheduling startup mode is responsible only for task loading, task execution, and lifecycle management, without involving task creation or task update on the client. In this way, even if an application which is set to the task scheduling startup mode has been started and the system load all tasks onto this application, this application never becomes a performance bottleneck of the whole cluster system because this application is responsible only for task loading, task execution and management without involving other task processing.

Moreover, the application which works in the node startup mode involves only the operations of creating, adding, deleting and modifying tasks in the database on the client, without managing the task loading, task execution or lifecycle. Therefore, at the time of startup, the application which works in the node startup mode never starts the task in the database or contends for system resources, and a task is never loaded repeatedly by multiple applications.

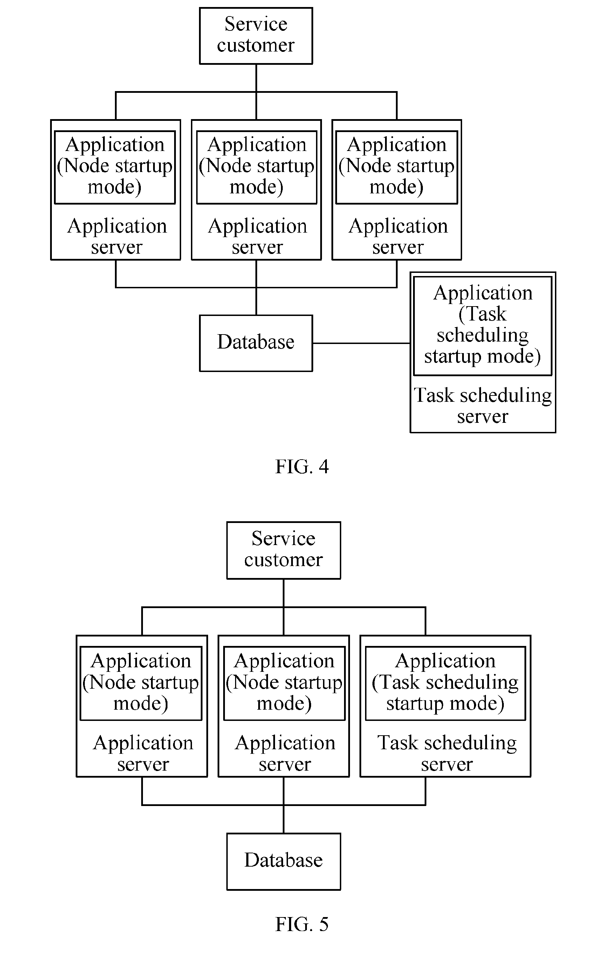

The process of applying the method for implementing tasks in a cluster environment under the present invention is illustrated in FIG. 4. The application in the service application server in the cluster may be set to a node startup mode, and the application in the application server which is independent of the cluster environment is set to the task scheduling startup mode, namely, the application server which is independent of the cluster environment becomes a task scheduling server. Moreover, for the purpose of disaster recovery of the cluster, the task scheduling server may be set into multiple systems, and preferably, into a dual system, and the two systems are mutually standby. That is, one system is active, and the other system is standby. In this way, the system resources are never contended for at the time of starting the applications, and the security of the system is enhanced with respect to disaster recovery.

In the process of applying the method for implementing tasks in a cluster environment under the present invention, for the purpose of cost-efficiency of hardware, a service application server in the cluster environment may be configured as a task scheduling server, as shown in FIG. 5. In this way, the cost of the cluster system is reduced as compared with the configuration mode shown in FIG. 4.

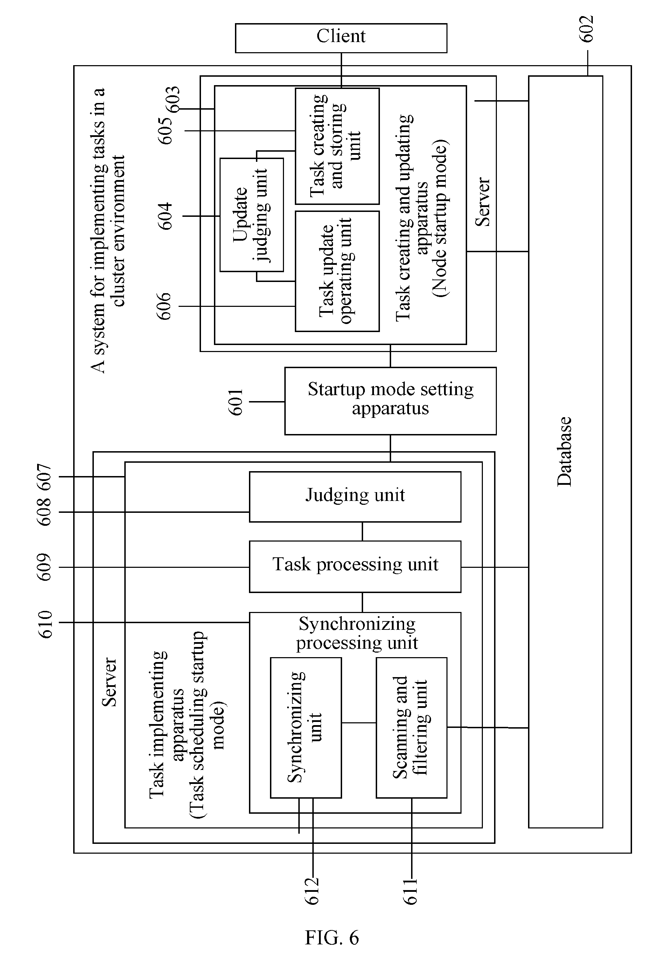

A system for implementing tasks in a cluster environment is provided in an embodiment of the present invention. As shown in FIG. 6, the system includes a startup mode setting apparatus 601, a database 602, a task creating and updating apparatus 603 which is set to the node startup mode, and a task implementing apparatus 607 which is set to the task scheduling startup mode, as detailed below:

The startup mode setting apparatus 601 is adapted to set a startup mode for the task-related apparatuses (603 and/or 607) in the system.

The startup modes set by the startup mode setting apparatus 601 may include: stand-alone startup mode, node startup mode, and task scheduling startup mode. The stand-alone startup mode is the working mode in a non-cluster environment, and is not repeated here any further.

The startup mode setting apparatus 601 may set different startup modes for the task-related apparatuses (603 and/or 607) in the system beforehand, and modify the set startup mode as required.

The database 602 is adapted to store created tasks and their timestamp.

The task creating and updating apparatus 603 is set to the node startup mode, and is adapted to create a task according to the user information and store the task into the database 602, and update the task in the database.

The task creating and updating apparatus 603 includes:
an update judging unit 604, adapted to: judge whether the startup mode of the task creating and updating apparatus 603 is a node startup mode when the task creating and updating apparatus 603 is started, namely, judge whether the apparatus 603 needs to create a task and/or update the task in the database 602;
a task creating and storing unit 605, adapted to: create a task as required by the user when the update judging unit 604 determines that the apparatus 603 needs to create a task, and store the created task into the database 602; and
a task update operating unit 606, adapted to: update the task in the database 602 as required by the user after the update judging unit 604 determines that the apparatus 603 needs to update the task in the database 602, and specifically, delete or modify the task in the database 602.

A system for implementing tasks in a cluster environment in an embodiment of the present invention may include one or more task creating and updating apparatuses 603. However, the apparatus 603 is not responsible for task loading, task execution or lifecycle management, but is responsible only for creating a task on the client and adding, deleting or modifying the task in the database 602 or other operations. Therefore, the apparatus 603 never starts tasks in the database 602, and one task is never loaded repeatedly by multiple applications.

The task implementing apparatus 607 is set to the task scheduling startup mode, and is adapted to: retrieve the task from the database 602 and load the task when determining that the task loading operation is required; and create a task instance, and store the task instance into the memory of the server that covers the apparatus 607. Optionally, the task implementing apparatus 607 starts a scan thread, and synchronizes the task in the database to the memory of the server.

The task implementing apparatus 607 includes:
a judging unit 608, adapted to: judge whether the startup mode of the task implementing apparatus 607 is a task scheduling startup mode when the task implementing apparatus 607 is started, namely, judge whether the apparatus 607 needs to execute the task in the database 602; and
a task processing unit 609, adapted to: obtain and load a task after the judging unit 608 determines that a task loading operation needs to be executed, create a task instance, and store the task instance into the memory of the server that the apparatus affiliates with.

Optionally, the task implementing apparatus 607 further includes a synchronizing processing unit 610, which is adapted to start a scan thread and synchronize the task in the database 602 to the memory of the server.

The synchronizing processing unit 610 may include:
a scanning and filtering unit 611, adapted to: scan the timestamp of the task in the database 602, and filter certain tasks out of the database 602, namely, the tasks whose timestamp is greater than the time of the task retrieved by the task processing unit 609 from the database; and
a synchronizing unit 612, adapted to synchronize the task filtered out by the scanning and filtering unit 611 with the task instance stored in the memory of the server.

Specifically, the synchronizing unit 612 compares the task filtered out by the scanning and filtering unit 611 with the task instance stored in the memory of the server. If the task identifiers are the same, the synchronizing unit 612 updates the attribute of the task instance in the memory of the server ; or, if the task filtered by the scanning and filtering unit 611 out of the database 602 is in the deleted state, the synchronizing unit 612 deletes the corresponding task instance in the memory of the server; if the memory of the server includes no task identifier which is the same as the task filtered out, the synchronizing unit 612 creates a task instance of the new task in the memory of the server.

In the system for implementing tasks in a cluster environment under the present invention, one or more task implementing apparatuses 607 may exist, and preferably, a dual system is applied, and the two systems are mutually standby. That is, one system is active, and the other system is standby. In this way, the system resources are never contended for at the time of starting the applications, and the security of the system is enhanced with respect to disaster recovery. Moreover, the task implementing apparatus 607 is responsible only for task loading, task execution and lifecycle management, without involving task update on the client. Therefore, this problem is overcome: When an application is started first, the system loads all task-related operations onto this application, and this application becomes a performance bottleneck of the whole cluster.

In the system for implementing tasks in a cluster environment in an embodiment of the present invention, the task creating and updating apparatus 603 and the task implementing apparatus 607 may be set into the server.

To sum up, the embodiments of the present invention solve the problems in the prior art, and bring the following benefits:

Only the applications which are set to the task scheduling startup mode perform the operation of loading tasks. Therefore, if only one application is set to the task scheduling startup mode, the situation of one task being loaded by multiple applications is avoided.

In the embodiments of the present invention, if an application server is abnormal or shut down, the startup mode of the application in other application servers may be reset to migrate the tasks in the database to other normal application servers automatically, thus ensuring that the corresponding tasks can still be applied normally.

In the embodiments of the present invention, the application for loading tasks may be set and selected in the server flexibly, and this application is responsible only for loading tasks. Therefore, this problem is avoided: All tasks are loaded onto an application which has a weak processing capability or is heavy-loaded and this application becomes a performance bottleneck of the whole cluster.

Although the invention has been described through some preferred embodiments, the invention is not limited to such embodiments. It is apparent that those skilled in the art can make modifications and variations to the invention without departing from the spirit and scope of the invention. The invention is intended to cover the modifications and variations provided that they fall in the scope of protection defined by the following claims or their equivalents.

## Claims

1. A method for implementing a task in a cluster environment, comprising:
retrieving, by a specified application, a task from a database; and
loading the retrieved task, creating a task instance, by the specified application and storing the task instance into the memory of the server that runs the specified application.

2. The method according to claim 1, **characterized in that**, after finishing the loading and creating of the task, the method further comprises:
synchronizing the task in the memory of the server according to the task in the database.

3. The method according to claim 1, **characterized in that**, the method further comprises the step of setting the specified application, and the step comprises:
setting one or more applications in the cluster environment to the task scheduling startup mode, wherein the applications which are set to the task scheduling startup mode serve as the specified applications; and
setting other applications in the cluster environment to the node startup mode, wherein the applications which are set to the node startup mode are adapted to create a task, store the created task into the database, and update the task in the database.

4. The method according to claim 3, **characterized in that**, the database stores a timestamp of a task, and the timestamp of a task is the time that the task is created, modified or updated.

5. The method according to claim 4, **characterized in that**, synchronizing the task in the memory of the server according to the task in the database, further comprises:
starting a scan thread, scanning the stored timestamp of a task in a database, and filtering out the task whose timestamp is greater than the startup loading time of the task, and synchronizing the filtered out task to the memory of the server that runs the application.

6. The method according to claim 5, **characterized in that**, the synchronizing the filtered out task to the memory of the server that runs the application, further comprises:
comparing the task filtered out with the task instance stored in the memory of the server;
updating the attribute of the task instance in the memory of the server if the task identifiers of the two are the same;
deleting the task instance corresponding to the memory of the server if the task filtered out of the database is in the deleted state; or
creating a task instance of the new task in the memory of the server if the memory of the server includes no task identifier which is the same as the identifier of the task filtered out.

7. An apparatus for implementing a task, **characterized in** comprising:
a judging unit, adapted to judge whether the specified application needs to execute a task loading operation; and
a task processing unit, adapted to obtain and load a task after the judging unit determines that the specified application needs to execute a task loading operation, create a task instance, and store the task instance into the memory of the server that the apparatus affiliates with.

8. The apparatus of claim 7, **characterized in that**, the apparatus further comprises:
a synchronizing processing unit, adapted to synchronize the task in the memory of the server according to the task in a database.

9. The apparatus of claim 8, **characterized in that**, the synchronizing processing unit further comprises:
a scanning and filtering unit, adapted to scan the timestamp of the task in a database, and filter the task whose timestamp is greater than the time of the task retrieved by the task processing unit from the database; and
a synchronizing unit, adapted to synchronize the task filtered out by the scanning and filtering unit with the task instance stored in the memory of the server.

10. A system for implementing a task in a cluster environment, **characterized in**, comprising:
a database, adapted to store a task and its time stamp; and
multiple servers, wherein an application is specified in one of the multiple servers, which contains a task implementing apparatus, the task implementing apparatus is adapted to retrieve and load a task stored in the database when determining it is necessary to execute the task loading operation, and the task implementing apparatus is further adapted to create a task instance, and store the task instance into the memory of the server that the apparatus affiliates with.

11. The system according to claim 10, **characterized in that**, an application not specified in one of the multiple servers comprises a task creating and updating apparatus and a startup mode setting apparatus,
the task creating and updating apparatus is adapted to create a task and store the task into the database and update the task in the database; and
the startup mode setting apparatus is adapted to set a startup mode for the task-related apparatuses in the cluster, and the startup mode comprises: stand-alone startup mode, node startup mode, and task scheduling startup mode.

12. The system according to claim 11, **characterized in that**, the task creating and updating apparatus comprises:
a task creating and storing unit, adapted to create a task and store the created task into the database;
an update judging unit, adapted to judge whether to update the task in the database;
a task update operating unit, adapted to update the task in the database when the update judging unit determines that the updating is needed.
